# EUROPEAN PATENT SPECIFICATION

(11) **EP 3 146 107 B1**
(45) Date of publication and mention of the grant of the patent: **19.12.2018**
(21) Application number: 15796199.6
(22) Date of filing: 19.05.2015
(51) Int. Cl.: D21C 7/06, D21B 1/26, B30B 9/12, B65G 33/14, B65G 47/18

(54) **ARRANGEMENT FOR FEEDING COMMINUTED MATERIAL USING A PLUG SCREW FEEDER**
ANORDNUNG ZUR ZUFÜHRUNG EINES ZERKLEINERTEN MATERIALS MITHILFE EINES STOPFSCHNECKENFÖRDERERS
AGENCEMENT D'ALIMENTATION EN MATÉRIAU BROYÉ AU MOYEN D'UN DISPOSITIF D'ALIMENTATION À VIS À TAMPON

(30) Priority: 22.05.2014 SE 1450611
(43) Date of publication of application: 29.03.2017
(73) Proprietor: Valmet Aktiebolag, 851 94 Sundsvall (SE)
(72) Inventor: MELLANDER, Stefan, S-86532 Alnö (SE); SVEDBERG, Peter, S-86533 Alnö (SE)
(74) Representative: Saitton, Hanna Johanna
(86) International application number: PCT/SE2015/050552
(87) International publication number: WO 2015/178828

(56) References cited:
- EP-A1- 2 634 544
- WO-A1-91/04371
- WO-A1-2007/113497
- WO-A1-2013/126007
- WO-A1-2013/126007
- JIANJUN DAI ET AL.: 'BIOMASS FEEDING FOR TERMOCHEMICAL REACTORS, PROGRESS IN ENERGY AND COMBUSTION' PROGRESS IN ENERGY AND COMBUSTION SCIENCE vol. 38, no. 5, October 2012, pages 716 - 736, XP028415259

## Description

### TECHNICAL FIELD

The present invention relates to a feeding arrangement for feeding comminuted cellulose material to a treatment stage using a plug screw feeder.

### BACKGROUND

Feeding of comminuted cellulose material to be treated in a pressurized treatment stage may be carried out in different ways and is dependent on a number of factors such as the characteristics of the material to be fed and the possible desired action on the material beside the actual feeding thereof. Plug screw feeders, in which a rotating screw transports the material forward by the continuous movement of the screw flights is a commonly used type of feeder. At the same time as the material is fed to the treatment stage, the screw and associated screw pipe or housing also exercises a volumetric compression function. Such plug screw feeders are very commonly used for feeding wood chips to a digester, an impregnator or a mechanical refiner, and especially to treatment stages operating at elevated pressures as the plug screw feeder provides for a pressure lock against back blow.

A known problem with such plug screw feeders is that the theoretical possible compression of the material in the plug screw feeder is often not obtained. A solution to such a problem may be to "force-feed" the plug screw feeder, i.e. making sure that material is fed evenly over the entire inlet of the plug screw feeder such that the feed screw flights are filled evenly before a compression is made in a subsequent compression zone of the plug screw feeder.

Several prior art solutions for "force-feed" has been disclosed in the patent literature.
Already in DE 497,689 (1930) was disclosed a "force-feed" to a plug screw feeder using a smaller single force feed screw. In DE 566,267 (1932) was disclosed another version of a "force-feed" to a plug screw feeder using a larger single force feed screw.
A prior art screw feeder apparatus using the principle of force-feeding is also disclosed in US Patent 5,320, 034(1994) / =EP 493,422. This patent is limited to how the speed of the single force feed screw as well as the feed screw of the plug screw feeder is controlled in order to increase the real compression ratio of the plug screw feeder. Similar speed control of the single force feed screw was also shown in JP 63299890 (1988).

In WO 2013/126007 (2013) was disclosed a specific design of a "force-feed" to a plug screw feeder using a large single force feed screw, but here the problem to be solved was potential back blow and the solution disclosed was to have a certain gap between the end of the force feed screw and the periphery of the feed screw in the plug screw feeder.

EP 2634544 A1 discloses a feed arrangement having the material to be fed distributed equally to several chutes.

However, when dealing with other types of materials, different considerations may apply. It has been discovered that the use "force-feed" with single feed screws feeding comminuted cellulose material to a plug screw feeder does not solve the problems with even initial filling of the screw feeders. Especially when feeding of non-wood plant material, such material having a much lower bulk density than wood chips, without modification.

Even with force-feed solutions it has been found that the filling is not as even over the plug screw feeder inlet as one may believe, and this is shown as local wear in the plug screw feeder housing, indicating that more cellulose material is packing between housing and feed screw at a local rotational position. The material seems to form dense plug especially against anti-rotation ridges in the screw housing.

This local wear in the housing is also seen in screw plug feeders where the comminuted cellulosic material is "starve-fed", meaning that the volumetric inflow of comminuted cellulosic material is less than the volumetric feeding capacity of the feed screw. In such "starve-fed" screw plug feeders the material accumulates in the bottom and may deflect the screw sidewise.

The use of non-wood plants has recently become more and more important. In some cases the material is used as fuel for generating heat. The material may also be used for production of pulp for paper-making purposes or the like, replacing wood as the source material. In many such processes, the non-wood material is treated in a pressurized reactor, for example in prehydrolysis Bio treatment processes where both temperature and pressure are high, imposing special requirements on the feeding arrangement.

There is thus a need for an improved feeding arrangement for comminuted cellulosic material, and especially suitable for the feeding of bulky non-wood plant material, and still be able to establish a permanent plug in the plug screw feeder preventing back blow from the treatment stage while avoiding total stop of the feeding.

### SUMMARY

A common problem with the approach of using a single force feed screw feeding a plug screw feeder is that the initial filling of the plug screw feeder should be uniform over the inlet to the plug screw feeder as to the outflow from the single force feed screw. However, it has been found that the plug screw feeder does not "suck in" the flow of material to the feed screw evenly from the plug screw feeder inlet. This is caused by the fact that the flights of the feed screw on one half of the inlet, i.e. the half located on one side of the feed screw axis prevents filling, while the flights of the feed screw on the other half of the inlet, i.e. the half located on the opposite side of the feed screw axis, promotes filling. This effect occurs also with "starve-fed" solutions, and especially those not having "force-feed" means and having the inlet to the plug screw feeder from the side.

In order to avoid the above identified problems it has been found beneficial for plug screw feeder operation, i.e. as to improved formation of a compacted plug, as well as reduced wear in the plug screw feeder housing that the feed of comminuted material to the feed screw should be done with at least 2 separate chutes, and that the majority of the cross section area of the chute outlets are arranged on opposite sides of the feed screw axis.

These and other objects are achieved in accordance with the appended claims.

More specifically, the invention according to the most general definition is related to a feeding arrangement for feeding comminuted material to a treatment stage, the feeding arrangement comprising
a plug screw feeder for feeding the material to the treatment stage, the feeder comprising a feed screw with a conical part at its outlet end and driven by an independent first motor and rotating around a feed screw axis and a corresponding plug screw housing surrounding the feed screw,
a first feeding chute for feeding the comminuted cellulose material to the plug screw feeder, said first chute being arranged at an angle in relation to the first screw axis, said angle lying in the range 30-150 degrees, preferably 90 degrees,
the chute being arranged to provide the material to an inlet section of the plug screw feeder, said inlet section being arranged in the periphery of the feed screw,
**characterized in that** there are at least 2 chutes arranged to feed material to the feed screw, and that the cross section of each chute is arranged such that more than 50% of the outlet cross section of a first chute is located on one side of the feed screw axis and more than 50% of the outlet cross section of a second chute is located on the other side of the feed screw axis. The objective problem to be solved is to enable feed of comminuted material to both sides of the feed screw axis independently from each other.
Hence, the major part of the cross section of each chute in a pair of chutes should be located on opposite sides of the feed screw axis, and preferably more than 50% and more preferably more than 90% or even 1 00% of the cross section of each chute.

According to a preferred embodiment of the invention could also each chute have force feeding means driven by its own independent motor. Hence, under the more general concept could also the chutes be void of any motor driven feeding means, and instead use chutes establishing variable static head of material in the chute using level control.

According to another preferred embodiment of the invention could each force feeding means comprise a force feeding screw driven by an independent motor for feeding the comminuted cellulose material to the plug screw feeder. Hence, under the more general concept could also other force feeding means be used in order to subject the feed of the material with a positive feeding action.

According to another preferred embodiment of the invention each force-feeding screw (20) is arranged essentially in the same horizontal plane as the feed screw (10), the force-feeding screw (20) feeding the material from the side. This embodiment is specifically exposed to uneven wear of the feed screw and poor establishment of a pressure blocking plug in the plug screw feeder, and the invention reduces these problems considerably. However, side fed plug screw feeders are often preferred in system where the building height is restricted or should be reduced or if other restrictions applies for routing feed pipes to the plug screw feeder.

According to another preferred embodiment of the invention each force-feeding screw is arranged essentially in the same vertical plane as the feed screw, the force-feeding screw feeding the material from above or alternatively from below to the feed screw. Vertical feed of material may be considered to improve pressure blocking plug formation in the plug screw feeder, but the problem with uneven wear may still also be a problem in vertical feed so a better and balanced formation of the plug is of interest.

According to another preferred embodiment of the invention a first pair of chutes are arranged in a staggered relation to a orthogonal plane to the first screw axis, such that the chutes are parallel to the flights of the feed screw sweeping over the chute outlets. This design of the relation of the chutes versus the flights of the feed screw has shown to be of particular effect.

According to another preferred embodiment of the invention a second pair of chutes are arranged in a staggered relation to a orthogonal plane to the first screw axis, such that the chutes are parallel to the flights of the feed screw sweeping over the chute outlets, thus adding up to at least 4 chutes feeding material to the feed screw. This design utilizes more of the ordinary rectangular conventional inlet to the plug screw feeder. The additional pair of chutes could functionally be operated as replenishment means if the first filling from the first pair of chutes collapses or changes during the forward transport of material in the screw.

According to another preferred embodiment of the invention the plug screw feeder housing surrounding the feed screw has an open inlet with a rectangular general shape covering the entire diameter of the feed screw, and that the chutes are connected to flow channels having similar cross section as the chutes said flow channels running through an insert body which otherwise is filling the entire rectangular open inlet, enabling the flow of material to be fed directly to the periphery of the feed screw via said flow channels in the insert body.

This design with an insert body is a perfect rebuild kit for a conventional screw feeder with a rectangular inlet. However, if the screw feeder is designed from scratch, then the chutes are fully integrated into the housing from start, and no functional insert body is needed. In following disclosed embodiments of the invention is used a conventional screw feeder with rectangular inlet, thus needing an insert body.

According to another preferred embodiment of the invention the independent first motor for the feed screw and the independent motors for the force feeding means located in the chutes, are connected to a control unit, such that each motor is adapted to be able to be driven at variable speed by the control unit in relation to preset threshold values stored in the control unit, such that the feed screw is rotated at a first speed, and each force feeding means located in the chute is driven at individual speed. The principles with independent motor controls for the force feed and the feed screw is all known prior art. However, the need to control the pair of force feeders differently, each force feeder working towards a half of the feed screw, is essential for this invention and used in a novel way.

The independent control of the force feeders may also be controlled in a feed-back manner dependent on the actual deflection on the screw. Said deflection may be measured in a number of ways using for example strain gauges on the screw per se, or using force sensors on the screw bearings. If the deflection is detected as an increased relative force in any direction could the independent force feeders be controlled incrementally until the deflection is compensated by different feed in the chutes.

For the purpose of this disclosure, the term comminuted cellulose material includes wood material as well as non-wood plant material. But the invention is especially suitable for bulky non-wood material from herbaceous plants, such as straw, bagasse, and wheat (bran and grain material). Peat material and empty fruit bunches are also encompassed by the term. In short, the term non-wood plant material is used for all kinds of plant/ plant part containing material not being defined as wood. The particle dimensions of the comminuted cellulose material may range in the interval of 5-50mm when feeding wood chips and in case of straw material the length of chopped straw may lie in the range up to 100-200mm.

According to one embodiment, the force-feeding screw may be arranged essentially perpendicular to the feed screw, meaning that their respective rotational axes are essentially perpendicular to each other. In one embodiment the force-feeding screw is arranged in such a way that the material is fed to the plug screw feeder from the side, i.e. a transverse feed into the plug screw feeder in relation to its feeding direction. The invention do not exclude the option from arranging the force-feeding screws in pairs from opposite sides of the plug screw feeder, even if this would result in a large foot print area of the system, as this could further balance the forces working against the feed screw and hence reduce uneven wear.

### BRIEF DESCRIPTION OF THE DRAWINGS

The invention, together with further objects and advantages thereof, may best be understood by reference to the following description and appended drawings, in which:
Fig. 1 is a schematic set up of a prior art feeding arrangement using a screw feeder;
Fig. 2 is a part of a prior art feeding arrangement using a screw feeder and a force feeder feeding from the side;
**Fig. 3** is a detail view of a prior art screw feeder housing;
**Fig. 4** is cross sectional view trough a prior art screw feeder housing;
**Fig. 5a-5c** are different views of a first preferred embodiment of the invention;
**Fig. 6a and 6b** are two views of an insert body used in the inlet of the screw feeder in the first embodiment of the invention;
**Fig. 7a and 7b** are different views of a second embodiment of the invention;
**Fig. 8a and 8b** are different views of a third preferred embodiment of the invention;
**Fig. 9a and 9b** are two views of an insert body used in the inlet of the screw feeder in the third preferred embodiment of the invention
**Fig. 10** is a view of an alternative of the third embodiment using force feed screws feeding from the side;
**Fig. 11** is a schematic control system for the independent control of the motors of the plug screw and the force feed screws;
**Fig. 12** is a view of a feeding arrangement as shown in figure 10, but being fed from above.

### DETAILED DESCRIPTION

In the drawings, similar or corresponding elements are denoted by the same reference numbers.

For the purpose of this disclosure, the term longitudinal is meant to be the direction along which a body or part has its greatest extension. When the term is used in connection with the axes of screws, the longitudinal axis corresponds to the rotational axis of the feed screw.
Also, the term force feeding means is used for any active feed of material driven by motors, and could include converging conveyor belts pressing and feeding the material in a nip towards the plug screw.
But in the simplest form could an individual flow control in each chute be obtained by controlling the static head of material in each chute by state of the art level control.

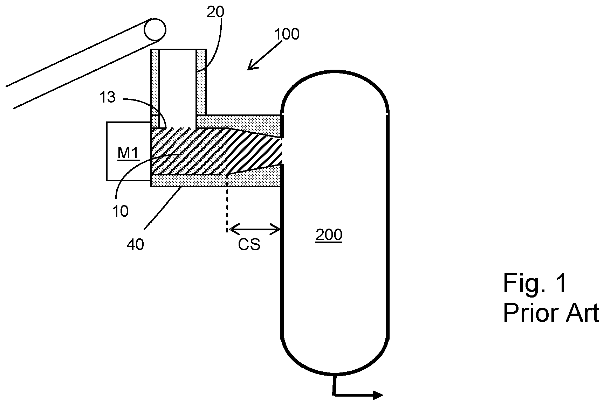

**Fig. 1** is a a schematic set up of a prior art feeding arrangement 100 using a plug screw feeder 40. In the simplest form the plug screw feeder is fed with comminuted cellulosic material from a conveyor belt trough a feeding chute 20. A certain level of material may be stacked in the chute forming a buffer volume for the plug screw feeder. A motor M1 is rotating the plug screw 10 and a plug is formed in the final conical compression section CS, before the material is forced into the subsequent treatment stage 200. The treatment stage is typically pressurized and could as shown in this figure be a treatment tower, but other treatment stages may be possible such as disc refiners, digesters, impregnation vessel etc.

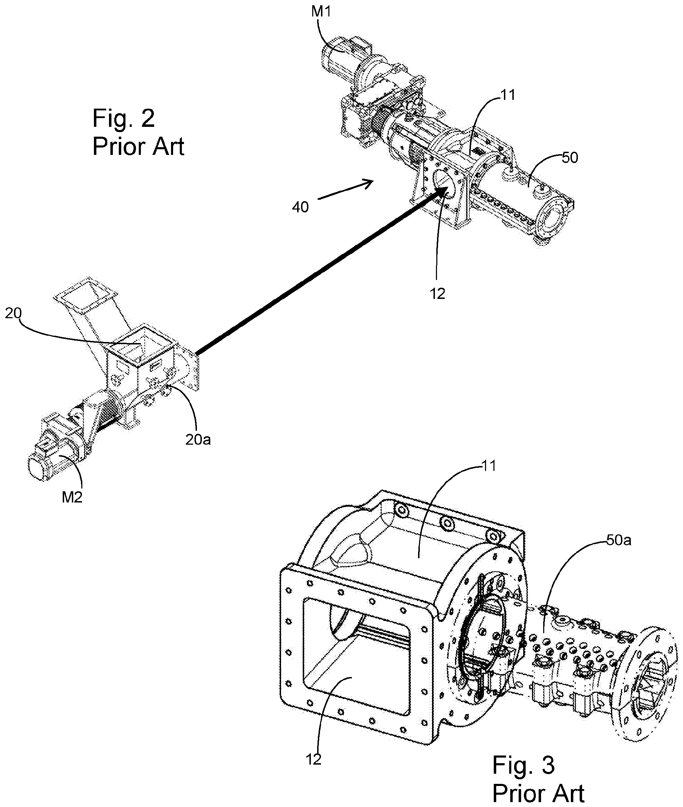

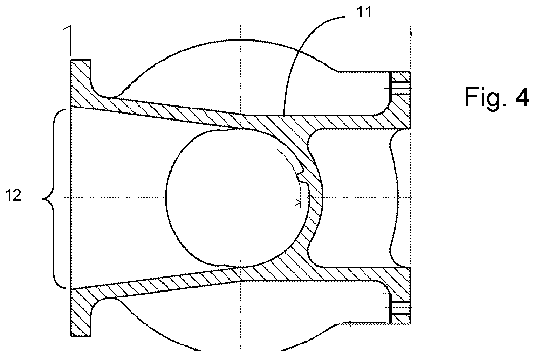

In **Fig. 2** is a part of a prior art feeding arrangement shown using a screw feeder 40 and a force feeder 20a connected to a chute 20 feeding from the side of the screw feeder 40. The force feeder is shown split from the screw feeder but typically the force feeder is directly bolted to the inlet 12 of the screw feeder 40. The plug screw housing 11 comprises a first transport section TS in the area of the inlet 12 and a conical final compression section CS in a closed part 50 of the plug screw housing. In **Fig.3** is shown the housing with the conical final compression section CS exposed, with draining apertures in the conical part 50a. In **Fig.4** is shown the housing in cross section over the inlet part 12 of the housing 11. Thus, figures 1-4 disclose in principle the prior art design for feeding arrangements using plug screw feeders.

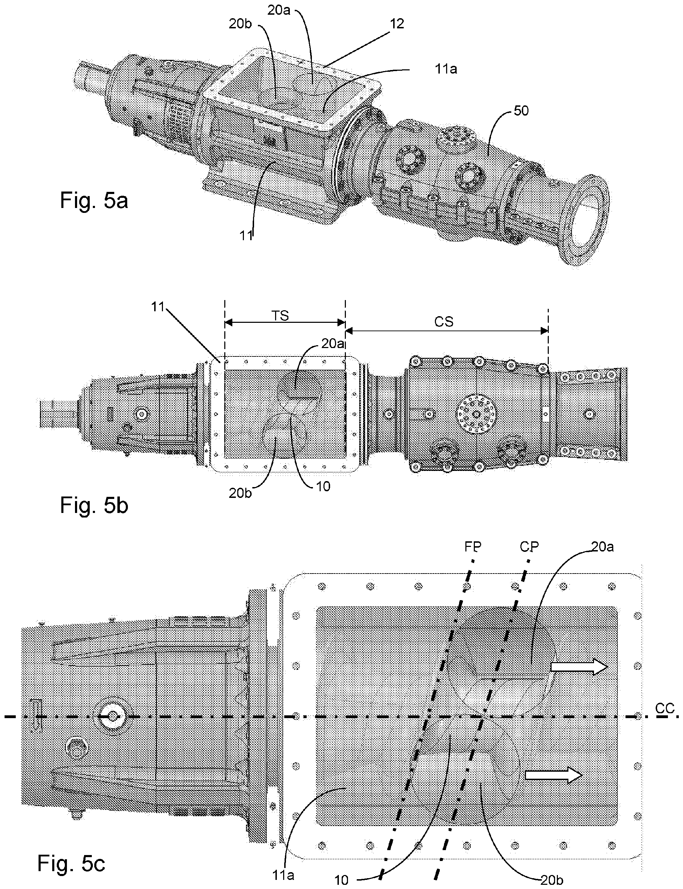

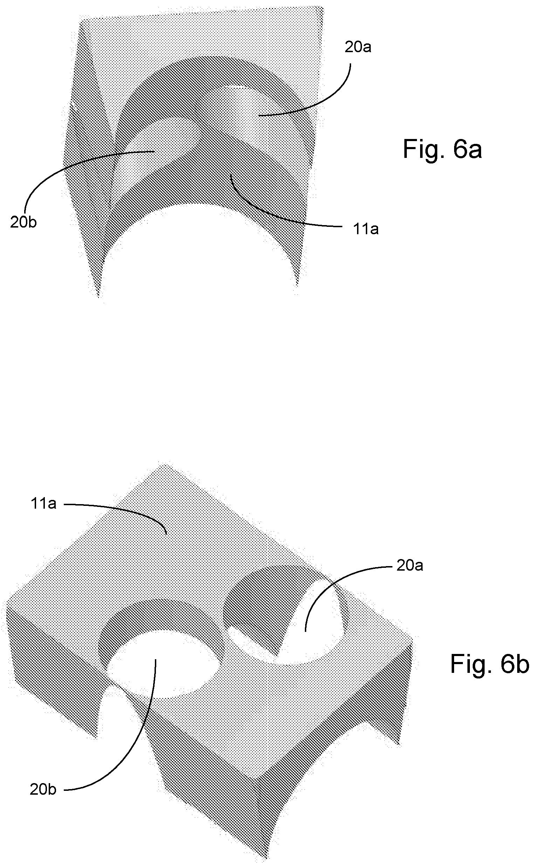

In **Fig 5a** is shown a perspective view of a first preferred embodiment of the invention. As in other conventional screw feeders a load bearing unit is shown on the left hand side of the inlet section 12 with the screw shaft protruding to the left. On the right hand side of the inlet section 12 is the outlet section arranged with the conical final compression section CS in a closed part 50 of the plug screw housing. The invention is shown as applied in a standard plug screw feeder with a rectangular inlet section 12, and an insert body 11a is mounted in the inlet 12 such that the entire inlet 12 is filled up besides two chute channels 20a and 20b. The insert body is shown in phantom shape partially transparent, but this insert body 11a is disclosed more in detail with reference to figures 6a and 6b. In figure 5b the first preferred embodiment of the invention is shown from above, with the first transport section TS and second compressions section CS marked up. The inventive concept with at least two chute channels 20a and 20b is described in more detail with reference to Fig. 5c. As shown in Fig. 5c are at least 2 chutes 20a 20b arranged to feed material to the plug screw 10, and that the cross section of each chute is arranged such that more than 50%, in the figure 100%, of the outlet cross section of a first chute 20a is located on one side of the first screw axis CC and more than 50%, in the figure 100%, of the outlet cross section of a second chute 20b is located on the other side of the first screw axis CC. For the most efficient filling of the plug screw it is preferred that each first pair of chutes 20a, 20b are arranged in a staggered relation to a orthogonal plane to the first screw axis CC, such that the center of the chutes are in a plane CP being parallel to a plane FP of the flights of the plug screw 10 sweeping over the chute outlets. The flights of the plug screw transports the material to the right as indicated with white arrows, if the screw rotates as shown on the indicator marking on the left of the bearing part. The upper chute 20a will thus feed to the half of the plug screw that has a motion out of the figure, while the lower chute 20b will feed the half of the plug screw that has an motion into the figure.

In Fig. 6a and 6b are shown in perspective views the insert body 11a isolated from the housing. The insert body 11a fills the entire rectangular inlet part of the housing besides the chute channels 20a and 20b, and the clearance between the cylindrical part of the insert body 11a and the screw flights is typically the same as between the housing and the screw flights, i.e. in the range of 0,5-10 mm. The effect of the insert body is that the inflow of comminuted material will be established as separated flows from each chute channel 20a,20b until the flow of material fed out from the chute is caught by the impact of the screw flights.

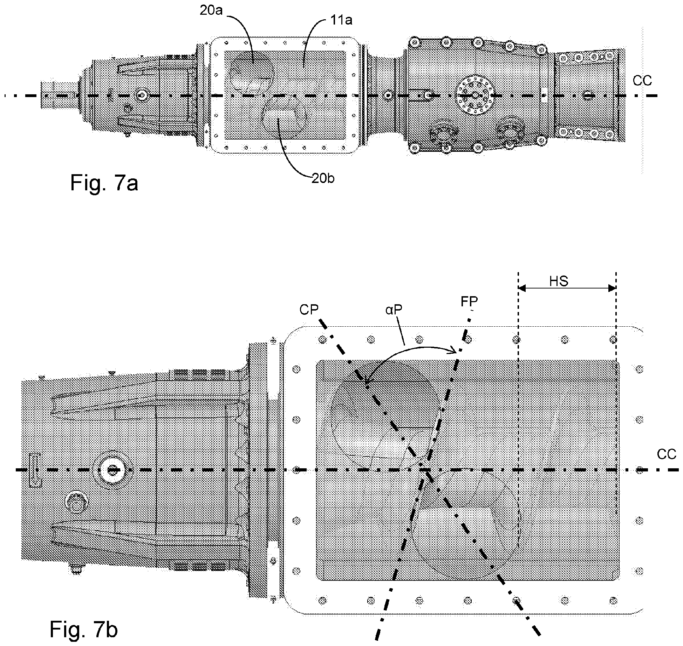

In **Fig 7a** is shown a perspective view of a second embodiment of the invention, and a detail view is shown in **Fig 7b****..** The difference here in relation to figure 5b is the arrangement of the chute channels 20a, 20b versus the orientation of the screw flights. As shown also in Fig. 7b are at least 2 chutes 20a 20b arranged to feed material to the plug screw 10, and that the cross section of each chute is arranged such that more than 50%, in the figure 100%, of the outlet cross section of a first chute 20a is located on one side of the first screw axis CC and more than 50%, in the figure 100%, of the outlet cross section of a second chute 20b is located on the other side of the first screw axis CC. In this embodiment is the filling of the plug screw performed such that each first pair of chutes 20a,20b are arranged in a staggered relation to a orthogonal plane to the first screw axis CC, such that the center of the chutes are in a plane CP not being parallel to a plane FP of the flights of the plug screw 10 sweeping over the chute outlets, but instead are in a plane CP arranged at an angle αP in relation to a plane FP of the flights of the plug screw 10 sweeping over the chute outlets. The upper chute 20a will thus feed to the half of the plug screw that has a motion out of the figure, while the lower chute 20b will feed the half of the plug screw that has an motion into the figure.
As indicated in figure 7b there is a potential in shortening of the screw housing, as the distance HS is not needed for filling the plug screw during the transport section TS.

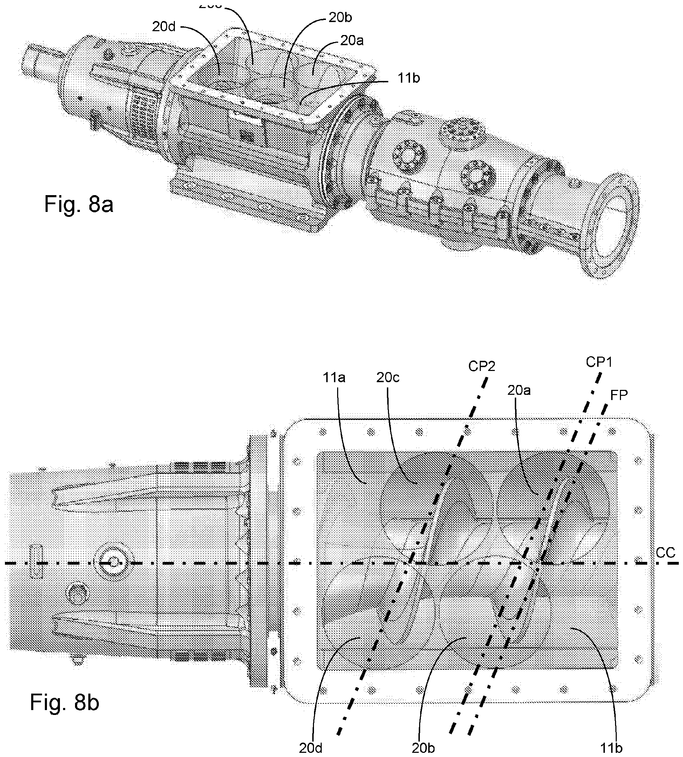

In Fig. 8a is shown a perspective view of a third preferred embodiment of the invention. The difference here in relation to figure 5a is that a second pair of chute channels 20c and 20d are arranged through the insert body 11b besides the first pair of chute channels 20a and 20b. For the most efficient filling of the plug screw it is preferred that also the second pair of chutes 20c, 20d are arranged in a staggered relation to a orthogonal plane to the first screw axis CC, such that the center of the chutes are in a plane CP2 being parallel to a plane FP of the flights of the plug screw 10 sweeping over the chute outlets. Thus, both chute pairs are arranged in planes CP1 and CP2 being parallel to a plane FP of the flights of the plug screw 10 sweeping over the chute outlets. The embodiment of figure 8a and 8b thus utilize more of the available rectangular inlet section that is filled with the insert body 1 1b. The first pair of inlet chutes filling the plug screw, here inlet chutes 20c and 20d, could then provide with major part of the filling while the second pair of inlet chutes, here inlet chutes 20a and 20b located closer to the outlet, could then provide with some complementing filling of the screw feeder.

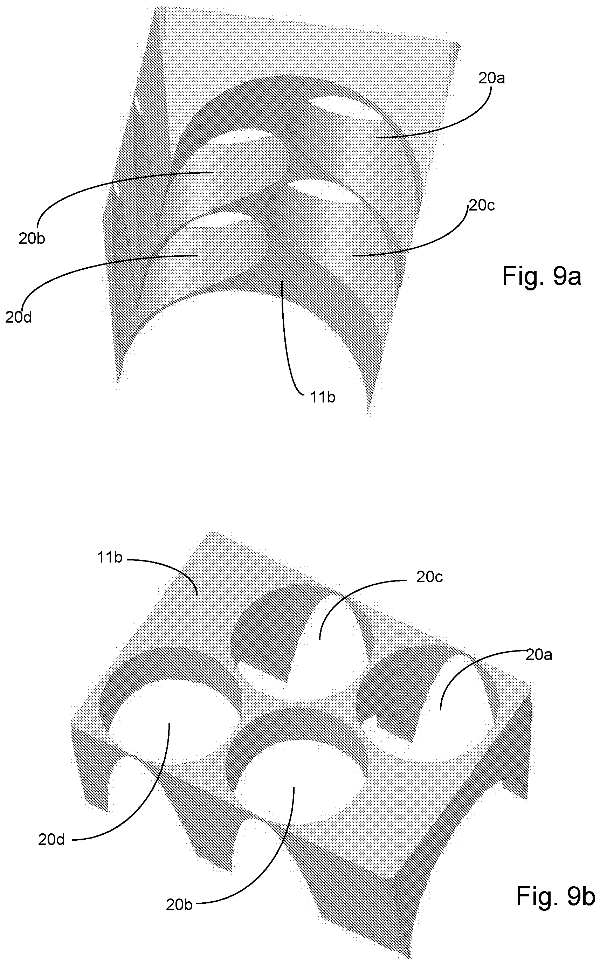

In Fig. 9a and 9b are shown in perspective views the insert body 11b isolated from the housing of this third embodiment. The insert body 11b fills the entire rectangular inlet part of the housing besides the chute channels 20a, 20b, 20c and 20d, and the clearance between the cylindrical part of the insert body 11b and the screw flights is typically the same as between the housing and the screw flights, i.e. in the range of 0,5-10 mm. The effect of the insert body is that the inflow of comminuted material will be established as separated flows from each chute channel 20a, 20b, 20c, and 20d until the flow of material from the chutes are caught by the impact of the screw flights.

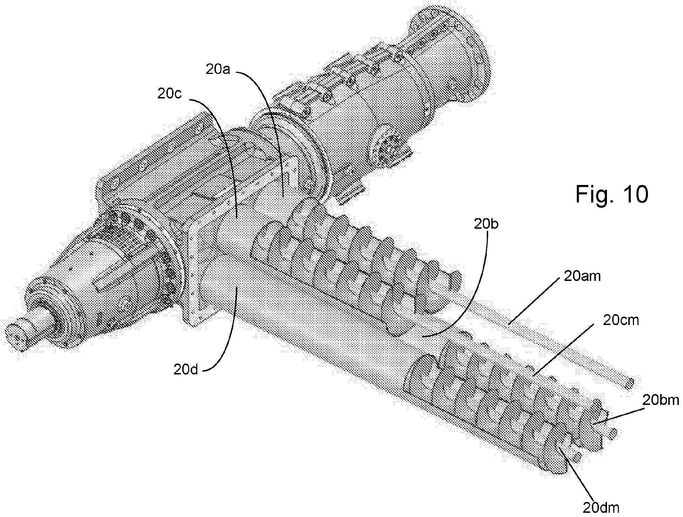

In figure 10 is shown an alternative for the third embodiment including force-feeding screws 20am, 20bm, 20cm and 20dm in each of the four inlet ducts 20a, 20b, 20c and 20d, with force feed from the side and into the plug screw. Individual motors for the force feeding screws are at hand but not shown in this drawing.

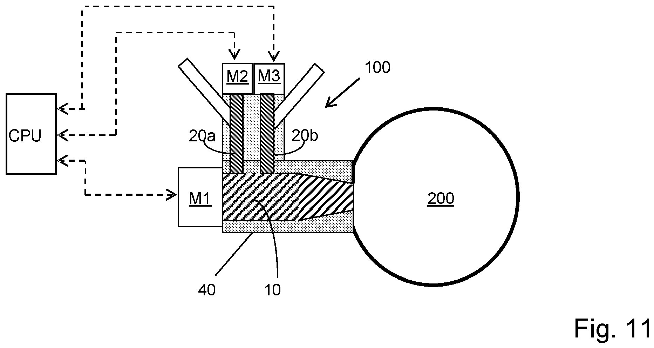

In figure 11 is schematically visualized a control system for the independent control of the motors of the plug screw and the force feed screws if using only 2 inlet ducts 20a, 20b. For the third embodiment the control system is similar but with additional 2 chutes and 2 motors for the additional force feed screws. Here a control unit CPU is connected in bidirectional manner to each motor M1, M2 and M3. The CPU could detect the prevailing torque of each motor, which in a conventional manner may be a simple detection of the averaged electrical current (in amperes). Hence, a starting torque could be stored in the CPU while operating the motors with empty chutes, and said starting torque (measured in average ampere) is stored as a first reference for each individual motor and is thus used as a "no-load" reference. The speed of each motor (and hence the feeding capacity of each screw) is controlled by electrical control, and during operation the speed of the plug screw motor M1 is the primary control target. The speed of the force feeding motors M2 and M3 are the secondary control targets and the speed thereof are increased in steps until the driving torque of screw motor M1 reached a set value above the starting torque thereof, and when the torque is stable over time (less variation). Because the force feeding motors are working at different conditions, i.e. against the screw flights or concurrent with the screw flight, could optimal filling effect be obtained from each inlet duct.
Thus, the force-feeding screws 20am and 20bm and optionally the screws 20cm and 20dm are arranged to be rotatable at variable rotational speeds. The plug screw 10 is also arranged to be able to rotate at variable speed, the speeds of the plug screw 10 and each of the force-feeding screws 20am-20dm being variable independently of each other.
The force-feeding screws may be run at over speed, i.e. at a speed resulting in a low degree of filling in the force-feeding screws as such or at under speed i.e. at a speed resulting in a high degree of filling in the force-feeding screws as such. In any case, the rotational speed of the plug screw is kept at a certain driving torque allowing a formation of a stable plug in the outlet thereof. When the driving torque of the plug screw is reaching an upper set value could the speed of the force feeding means be reduced accordingly.

The feeding arrangement may further comprise (not shown) a volumetric detection of material fed into the force-feeding screw 20. The feeding device sets a predetermined rate of material flow, i.e. the production flow. The rotational speed of the plug screw 10 is then set in relation to the predetermined rate of material flow in order to achieve a predetermined density increase of the material in the plug screw (preferably measured as the prevailing driving torque of the motor in amperes). If the production flow is increased, the rotational speed of the plug screw 10 has to be increased to maintain the same density in the plug screw feeder 40. If the rotational speed of the plug screw 10 is maintained while the production flow increases, the density will increase. By increasing the material density in the plug screw feeder an improved fluid-tight plug flow of the material is created through the plug screw feeder 40, but the plug density may not increase over a certain level where plugging occurs which level is specific for each kind of material being compressed.

The plug screw 10 and the force-feeding screws 20am-20dm are preferably arranged perpendicular to each other, i.e. having their respective rotational axes perpendicular to each other. In a preferred embodiment, they are arranged with their respective axes essentially in the same horizontal plane, so that the non-wood plant material is fed to the plug screw from the side. Preferably, the inlet section 12 is located close to a first end 13 of the plug screw 10, the first end being the one furthest away from the treatment stage 200.

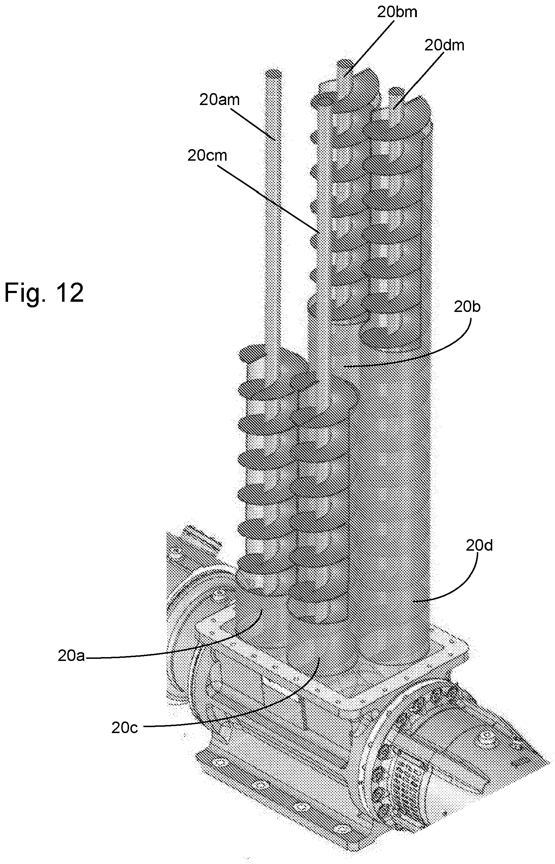

In figure 12 is shown an alternative to figure 10 for the third embodiment including force-feeding screws 20am, 20bm, 20cm and 20dm in each of the four inlet ducts 20a, 20b, 20c and 20d, with force feed from above and into the plug screw. Individual motors for the force feeding screws are at hand but not shown in this drawing.

Although the invention has been described with reference to specific illustrated embodiments, it is emphasized that it also covers equivalents to the disclosed features, as well as changes and variants obvious to a man skilled in the art, and the scope of the invention is only limited by the appended claims.
The embodiments as shown in figures 5a and 8a could also have feeding chutes from opposite side of the housing 11, i.e. with a pair of chutes feeding from below in figure 5a or with four chutes from below in figure 8a. All chutes may also be arranged in a horizontal plane or alternatively in a vertical plane.

## Claims

1. A feeding arrangement (100) for feeding comminuted cellulose material to a treatment stage (200), the feeding arrangement comprising
a plug screw feeder (40) for feeding the material to the treatment stage, the feeder comprising a feed screw (10) with a conical part at its outlet end and driven by an independent first motor (M1) and rotating around a first screw axis (CC) and a corresponding plug screw housing (11) surrounding the feed screw (10),
a chute (20) for feeding the comminuted cellulose material to the plug screw feeder (40), said chute (20) being arranged at an angle in relation to the first screw axis (CC), said angle lying in the range 30-150 degrees, preferably 90 degrees,
the chute being arranged to provide the material to an inlet section(12) of the plug screw feeder (40), said inlet section being arranged in the periphery of the feed screw (10),
**characterized in that** there are at least two chutes (20) arranged to feed material to the feed screw (10), said chutes comprising a first chute (20a) and a second chute (20b), and that the cross section of each chute is arranged such that more than 50% of the outlet cross section of the first chute (20a) is located on one side of the first screw axis (CC) and more than 50% of the outlet cross section of the second chute (20b) is located on the other side of the first screw axis (CC).

2. A feeding arrangement according to claim 1, wherein each chute has force feeding means driven by its own independent motor.

3. A feeding arrangement according to claim 2, wherein each force feeding means comprises a force feeding screw (20am, 20bm) driven by an independent motor (M2, M3) for feeding the comminuted cellulose material to the plug screw feeder (40).

4. A feeding arrangement according to claim 3, wherein each force-feeding screw (20am, 20bm) is arranged essentially in the same horizontal plane as the feed screw (10), the force-feeding screw (20) feeding the material from the side.

5. A feeding arrangement according to claim 3, wherein each force-feeding screw (20am, 20bm) is arranged essentially in the same vertical plane as the feed screw (10), the force-feeding screw (20am, 20bm) feeding the material from above or alternatively from below to the feed screw.

6. A feeding arrangement according to claim 1, wherein a first pair of chutes are arranged in a staggered relation to a orthogonal plane to the first screw axis (CC), such that the chutes are in a plane (CP) being parallel to a plane (FP) of the flights of the feed screw sweeping over the chute outlets.

7. A feeding arrangement according to claim 6, wherein a second pair (20c,20d) of chutes are arranged in a staggered relation to a orthogonal plane to the first screw axis, such that the chutes are in a plane (CP) being parallel to a plane (FP) of the flights of the feed screw sweeping over the chute outlets, thus adding up to at least four chutes (20a,20b,20c,20d) feeding material to the feed screw (10).

8. A feeding arrangement according to claim 1, wherein the plug screw housing (11) surrounding the feed screw (10) has an open inlet (11) covering the entire diameter of the feed screw, and that the chutes are connected to flow channels (20a,20b) having similar cross section as the chutes said flow channels running through an insert body (11a) which otherwise is filling the entire open inlet, enabling the flow of material to be fed directly to the periphery of the feed screw via said flow channels in the insert body.

9. A feeding arrangement according to claim 2, wherein the independent first motor (M1) for the feed screw (10) and the independent motors (M2,M3) for the force feeding means located in the chutes, are connected to a control unit (CPU), such that each motor is adapted to be able to be driven at variable speed by the control unit in relation to preset threshold values stored in the control unit, such that the feed screw is rotated at a first speed, and each force feeding means located in the chute is driven at individual speed.

## Patentansprüche

1. Zuführanordnung (100) zum Zuführen von zerkleinertem Cellulosematerial zu einer Behandlungsstufe (200), wobei die Zuführanordnung Folgendes umfasst:
einen Stopfschneckenförderer (40) zum Zuführen des Materials zu der Behandlungsstufe, wobei der Förderer eine Förderschnecke (10) mit einem konischen Teil an ihrem Auslassende, die durch einen unabhängigen ersten Motor (M1) angetrieben wird und sich um eine erste Schneckenachse (CC) dreht, und ein entsprechendes Stopfschneckengehäuse (11), welches die Förderschnecke (10) umgibt, umfasst,
einen Schacht (20) zum Zuführen des zerkleinerten Cellulosematerials zum Stopfschneckenförderer (40), wobei der Schacht (20) in einem Winkel in Bezug auf die erste Schneckenachse (CC) angeordnet ist, wobei der Winkel in dem Bereich von 30 bis 150 Grad, vorzugsweise 90 Grad, liegt,
wobei der Schacht angeordnet ist, um das Material einem Einlassabschnitt (12) des Stopfschneckenförderers (40) zuzuführen, wobei der Einlassabschnitt am Umfang der Förderschnecke (10) angeordnet ist,
**dadurch gekennzeichnet, dass** mindestens zwei Schächte (20) angeordnet sind, um der Förderschnecke (10) Material zuzuführen, wobei die Schächte einen ersten Schacht (20a) und einen zweiten Schacht (20b) umfassen, und wobei der Querschnitt jedes Schachts derart angeordnet ist, dass mehr als 50 % des Auslassquerschnitts des ersten Schachts (20a) auf einer Seite der ersten Schneckenachse (CC) angeordnet sind und mehr als 50 % des Auslassquerschnitts des zweiten Schachts (20b) auf der anderen Seite der ersten Schneckenachse (CC) angeordnet sind.

2. Zuführanordnung nach Anspruch 1, wobei jeder Schacht eine Kraftzuführeinrichtung aufweist, die von ihrem eigenen unabhängigen Motor angetrieben wird.

3. Zuführanordnung nach Anspruch 2, bei der jede Kraftzuführeinrichtung eine Kraftförderschnecke (20am, 20bm) umfasst, die von einem unabhängigen Motor (M2, M3) angetrieben wird, um das zerkleinerte Cellulosematerial dem Stopfschneckenförderer (40) zuzuführen.

4. Zuführanordnung nach Anspruch 3, wobei jede Kraftförderschnecke (20am, 20bm) im Wesentlichen in derselben horizontalen Ebene wie die Förderschnecke (10) angeordnet ist, wobei die Kraftförderschnecke (20) das Material von der Seite zuführt.

5. Zuführanordnung nach Anspruch 3, wobei jede Kraftförderschnecke (20am, 20bm) im Wesentlichen in derselben vertikalen Ebene wie die Förderschnecke (10) angeordnet ist, wobei die Kraftförderschnecke (20am, 20bm) das Material der Förderschnecke von oben oder alternativ von unten zuführt.

6. Zuführanordnung nach Anspruch 1, wobei ein erstes Paar von Schächten in einer versetzten Beziehung zu einer orthogonalen Ebene zu der ersten Schneckenachse (CC) angeordnet ist, derart, dass sich die Schächte in einer Ebene (CP) befinden, die parallel zu einer Ebene (FP) der Flügel der Förderschnecke, die über die Schachtauslässe streichen, ist.

7. Zuführanordnung nach Anspruch 6, wobei ein zweites Paar (20c, 20d) von Schächten in einer versetzten Beziehung zu einer orthogonalen Ebene zu der ersten Schneckenachse angeordnet ist, derart, dass sich die Schächte in einer Ebene (CP) befinden, die parallel zu einer Ebene (FP) der Flügel der Förderschnecke, die über die Schachtauslässe streichen, ist, wodurch es insgesamt mindestens vier Schächte (20a, 20b, 20c, 20d) gibt, die der Förderschnecke (10) Material zuführen.

8. Zuführanordnung nach Anspruch 1, wobei das die Förderschnecke (10) umgebende Stopfschneckengehäuse (11) einen offenen Einlass (11) aufweist, der den gesamten Durchmesser der Förderschnecke abdeckt, und wobei die Schächte mit Strömungskanälen (20a, 20b) mit einem ähnlichen Querschnitt wie die Schächte verbunden sind, wobei die Strömungskanäle durch einen Einsatzkörper (11a) verlaufen, der ansonsten den gesamten offenen Einlass füllt, wodurch der Materialfluss durch die Strömungskanäle in dem Einsatzkörper direkt zum Umfang der Förderschnecke geleitet werden kann.

9. Zuführanordnung nach Anspruch 2, wobei der unabhängige erste Motor (M1) für die Förderschnecke (10) und die unabhängigen Motoren (M2, M3) für die in den Schächten angeordnete Kraftfördereinrichtung mit einer Steuereinheit (CPU) verbunden sind, derart, dass jeder Motor so angeordnet ist, dass er von der Steuereinheit mit variabler Geschwindigkeit in Bezug auf voreingestellte Schwellenwerte, die in der Steuereinheit gespeichert sind, angetrieben werden kann, so dass die Förderschnecke mit einer ersten Geschwindigkeit gedreht wird und jede Kraftfördereinrichtung in dem Schacht mit individueller Geschwindigkeit angetrieben wird.

## Revendications

1. Agencement d'alimentation (100) pour alimenter en matière cellulosique broyée un étage de traitement (200), l'agencement d'alimentation comprenant
un dispositif d'alimentation à vis à noyau tronconique (40) pour alimenter en matière l'étage de traitement, le dispositif d'alimentation comprenant une vis d'alimentation (10) ayant une partie conique au niveau de son extrémité de sortie et entraînée par un premier moteur indépendant (M1) et tournant autour d'un premier axe de vis (CC) et un fourreau de vis à noyau tronconique correspondant (11) entourant la vis d'alimentation (10),
une goulotte (20) pour alimenter en matière cellulosique broyée le dispositif d'alimentation à vis à noyau tronconique (40), ladite goulotte (20) étant agencée suivant un angle par rapport au premier axe de vis (CC), ledit angle se trouvant dans la plage de 30 à 150 degrés, et étant de préférence de 90 degrés,
la goulotte étant agencée pour alimenter en matière une section d'entrée (12) du dispositif d'alimentation à vis à noyau tronconique (40), ladite section d'entrée étant agencée en périphérie de la vis d'alimentation (10),
**caractérisé en ce qu'**il existe au moins deux goulottes (20) agencées pour alimenter en matière la vis d'alimentation (10), lesdites goulottes comprenant une première goulotte (20a) et une seconde goulotte (20b), et **en ce que** la section transversale de chaque goulotte est agencée de sorte que plus de 50 % de la section transversale de sortie de la première goulotte sont situés d'un côté du premier axe de vis (CC) et plus de 50 % de la section transversale de sortie de la seconde goulotte (20b) sont situés de l'autre côté du premier axe de vis (CC).

2. Agencement d'alimentation selon la revendication 1, dans lequel chaque goulotte comporte un moyen d'alimentation forcée entraîné par son propre moteur indépendant.

3. Agencement d'alimentation selon la revendication 2, dans lequel chaque moyen d'alimentation forcée comprend une vis d'alimentation forcée (20am, 20bm) entraînée par un moteur indépendant (M2, M3) pour alimenter en matière cellulosique broyée le dispositif d'alimentation à vis à noyau tronconique (40).

4. Agencement d'alimentation selon la revendication 3, dans lequel chaque vis d'alimentation forcée (20am, 20bm) est agencée sensiblement dans le même plan horizontal que la vis d'alimentation (10), la vis d'alimentation forcée (20) fournissant la matière depuis le côté.

5. Agencement d'alimentation selon la revendication 3, dans lequel chaque vis d'alimentation forcée (20am, 20bm) est agencée essentiellement dans le même plan vertical que la vis d'alimentation (10), la vis d'alimentation forcée (20am, 20bm) fournissant la matière depuis le dessus ou, en variante, depuis le dessous, à la vis d'alimentation.

6. Agencement d'alimentation selon la revendication 1, dans lequel une première paire de goulottes sont agencées de façon décalée par rapport à un plan orthogonal au premier axe de vis (CC), de sorte que les goulottes se trouvent dans un plan (CP) qui est parallèle à un plan (FP) des filets de la vis d'alimentation qui passent au-dessus des sorties des goulottes.

7. Agencement d'alimentation selon la revendication 7, dans lequel une seconde paire (20c, 20d) de goulottes sont agencées de façon décalée par rapport à un plan orthogonal au premier axe de vis, de sorte que les goulottes se trouvent dans un plan (CP) qui est parallèle à un plan (FP) des filets de la vis d'alimentation qui passent au-dessus des sorties des goulottes, ce qui fait un total d'au moins quatre goulottes (20a, 20b, 20c, 20d) fournissant de la matière à la vis d'alimentation (10).

8. Agencement d'alimentation selon la revendication 1, dans lequel le fourreau de la vis à noyau tronconique (11) entourant la vis d'alimentation (10) comporte une entrée ouverte (11) couvrant le diamètre entier de la vis d'alimentation, et les goulottes sont reliées à des canaux d'écoulement (20a, 20b) ayant une section transversale similaire à celle des goulottes, lesdits canaux d'écoulement traversant un corps encastré (11a) qui par ailleurs remplit entièrement l'entrée ouverte, permettant l'écoulement de la matière à alimenter directement dans la périphérie de la vis d'alimentation par le biais desdits canaux d'écoulement aménagés dans le corps encastré.

9. Agencement d'alimentation selon la revendication 2, dans lequel le premier moteur indépendant (M1) de la vis d'alimentation (10) et les moteurs indépendants (M2, M3) des moyens d'alimentation forcée situés dans les goulottes sont reliés à un module de commande (CPU), de sorte que chaque moteur est conçu pour pouvoir être entraîné à vitesse variable par le module de commande en fonction de valeurs seuils préréglées enregistrées dans le module de commande, de sorte que la vis d'alimentation tourne à une première vitesse, et chaque moyen d'alimentation forcée situé dans la goulotte est entraîné à une vitesse individuelle.
